# EUROPEAN PATENT APPLICATION

(11) **EP 3 628 425 A1**
(43) Date of publication of application: **01.04.2020**
(21) Application number: 18197427.0
(22) Date of filing: 28.09.2018
(51) Int. Cl.: B23B 29/04, B23B 27/04

(54) **TOOL HOLDER WITH CLAMPING SYSTEM FOR A CUTTING INSERT AND CUTTING TOOL**

(71) Applicant: VARGUS Ltd., 22311 Nahariya (IL)
(72) Inventor: Orlov, Alexander, 2226075 Nahariya (IL)
(74) Representative: Patentanwälte Ruff, Wilhelm, Beier, Dauster & Partner mbB

(57) **Abstract**

The invention relates to a tool holder with a main body (3) having a shank (30) and a support portion (31) projecting from the shank (30) in a forward direction, wherein the support portion (31) at a top face has a support surface (310), the tool holder (2) further comprising a clamping jaw (50) with a clamping surface (500), which together with the support surface (310) forms a clamp for a cutting insert (4), wherein the clamping jaw (50) is provided on a clamping element (5) formed separately from the main body (3), wherein the clamping element (5) has an element base body (51) and the clamping jaw (50) projects from the element base body (51), wherein rearwards of the support portion (31) the main body (3) is provided with a pocket (32) for receiving the element base body of the clamping element (5), the pocket (32) having a pocket base surface (320) facing towards a side of the main body (3), wherein the clamping element (5) is detachably secureable in the pocket (32), and wherein when the clamping element (5) is secured in the pocket (32), the clamping jaw (50) is forced towards the support surface (31). The invention further relates to a cutting tool and a method for clamping a cutting insert in a cutting tool.

## Description

### TECHNICAL FIELD AND PRIOR ART

The invention relates to a tool holder with a clamping system for a cutting insert, in particular a grooving insert, and cutting tool for a cutting machine, in particular a lathe machine, for example a Swiss-type lathe machine.

In operations in which a slot for grooving or for cutting off a workpiece is to be produced, typically a distal end of a tool holder supporting a cutting insert together with the cutting insert penetrates the slot. Hence, a thickness of the distal end of the tool holder supporting the cutting insert is limited by a thickness of the slot produced by the cutting insert. For producing small slots, tool holders having a thin distal end are required, which may be comparatively fragile. It is therefore known to provide clamping systems, in which through holes in the cutting insert or the distal end of the tool holder supporting the cutting insert are avoided.

For example, EP 2 123 378 A1 shows cutting tool comprising a tool holder with a shank and an insert having a front cutting edge, wherein the shank has a shank body with a forward protrusion having a support surface and a clamping jaw formed integrally with the shank body, wherein the shank body and the clamping jaw are spaced from each other for defining a receiving opening for receiving the insert. A screw is provided rearwards of the receiving opening which is oriented parallel to a clamping direction, wherein for clamping the insert the clamping jaw is deformed by tightening the screw.

### SUMMARY OF THE INVENTION

It is the object of the invention to provide a rigid tool holder with a clamping system, which allows a cutting insert to be replaced quickly and easily.

This object is solved by tool holder, the cutting tool and the method with the features of claims 1, 12 and 13. Preferred embodiments are defined in the dependent claims.

According to a first aspect, a tool holder with a main body having a shank and a support portion projecting from the shank in a forward direction is provided, wherein the support portion at a top face has a support surface, the tool holder further comprising a clamping jaw with a clamping surface, which together with the support surface forms a clamp for a cutting insert, wherein the clamping jaw is provided on a clamping element formed separately from the main body, wherein the clamping element has an element base body and the clamping jaw projects from the element base body, wherein rearwards of the support portion the main body is provided with a pocket for receiving the element base body of the clamping element, the pocket having a pocket base surface facing towards a side of the main body, wherein the clamping element is detachably secureable in the pocket, and wherein when the clamping element is secured in the pocket, the clamping jaw is forced towards the support surface.

A clamping direction is at least essentially perpendicular to a top face of the support portion. Preferably, a minimum distance of the clamping jaw from the support surface in a final mounting position is less than a height of the cutting insert received, such that when forcing the clamping element towards the final mounting position, the clamping jaw is resiliently deformed. The deformed clamping jaw exerts a clamping force on the cutting insert.

The pocket for the element base body is remote from the cutting area, wherein the pocket and the element base body received in the pocket can be chosen sufficiently large to allow a use of a suitable securing system.

In one embodiment, the element base body has a through hole and the pocket has a screw hole extending perpendicular to the pocket base surface, wherein the clamping element is detachably secureable in the pocket by means of a clamping screw extending through the through hole and screwed into the screw hole.

The screw extends perpendicular to a side face of the main body and, thus, perpendicular to the clamping direction. The screw does not penetrate the clamping jaw or the cutting insert. The element base body can be chosen sufficiently large such that a large clamping screw can be used.

In one embodiment, the through hole of the clamping element and a screw head of the clamping screw are provided with complementary conical contact surfaces. Hence, by tightening the clamping screw a final positioning of the clamping element is achieved.

In one embodiment, the element base body and the pocket each are provided with a forward abutment surface and a rearward abutment surface in the axial direction of the main body, which extend in parallel to each other, wherein the element base body is slidingly received between the forward abutment surface and the rearward abutment of the pocket. In other words, the clamping element is received slidingly in the pocket in a direction having a least one component in the clamping direction. For clamping a cutting insert, the clamping element is slidingly moved along the pocket. The forward abutment surfaces and the rearward abutment surfaces of the pocket and the element base body are conjointly referred to as abutment surfaces.

In one embodiment, the forward abutment surfaces and the rearward abutment surfaces of the pocket and the element base body each are inclined, so that when sliding moving the element base body in the pocket, the clamping element is moved in the axial direction of the main body. In particular, the abutment surfaces are inclined forwards. By slidingly moving the element base body in the pocket, an initial positioning of the clamping jaw and a preloading of the cutting insert to be clamped can be achieved.

In one embodiment, the clamping jaw projects from the forward abutment surface of the element base body, wherein a cut-out is provided between the clamping jaw and the forward abutment surface. The cut-out enhances an elastic or resilient deformability of the clamping jaw for clamping the cutting insert.

In one embodiment, the forward abutment surface of the pocket reaches to the support surface and is shorter than the forward abutment surface of the clamping element, such that the forward abutment surface of the clamping element projects from the forward abutment surface of the pocket for providing an axial stopper for a cutting insert received. Hence, a cutting insert positioning is achieved by using the forward abutment surface of the element base body as an axial stopper. This simplifies a production of the proposed clamping system. Further, in this embodiment an angle of inclination of the abutment surfaces influences an axial positioning of the insert, and directs a reaction force at the abutment surface towards the support surface on the support portion.

A thickness of the clamping jaw in one embodiment is less than a thickness of the element base body. The clamping element or at least the element base body of the clamping element in one embodiment is a plate-shaped element, so that a flat pocket can be provided.

In one embodiment, in a side view, the clamping surface and the support surface are arranged in parallel. In other embodiments, the clamping surface is inclined with respect to the support surface towards the support surface, preferably by an angle of less than about 4°, in particular about 2°. Due to the inclination, the clamping jaw further provides a component of a locking force in the axial direction. The relative inclination and, thus, the component of the locking force in the axial direction decrease with an elastic deformation of the clamping jaw, wherein with the deformation a contact area between the clamping surface and the insert increases. The clamping surface and/or the support surface in one embodiment is a flat or planar surface. In other embodiments, the clamping surface and/or the support surface is/are uneven.

In one embodiment the clamping surface of the clamping jaw facing the support surface comprises two oppositely inclined sub-surfaces, wherein in particular the clamping surface is convexly shaped. In alternative or in addition, in one embodiment the support surface comprises two oppositely inclined sub-surfaces, wherein in particular the support surface is convexly shaped. Pairing of the inclined surfaces with complementary surfaces of the cutting insert surfaces restricts a movement of the cutting insert to a movement in the axial direction of the main body.

According to a second aspect, a cutting tool comprising the described tool holder and a cutting insert is provided, wherein the cutting insert is detachably clamped between the clamping jaw of the separate clamping element and the support surface of the tool holder.

According to a third aspect, a method for clamping a cutting insert in a tool holder comprising a main body having a shank and a support portion projecting from the shank in a forward direction, wherein the support portion at a top face has a support surface, is provided, wherein a clamping element having an element base body and a clamping jaw protruding from the element base body is inserted in a pocket of the main body, which pocket is provided rearwards of the support portion of the main body and has a pocket base surface facing towards a side of the main body, wherein the clamping jaw is forced towards the support surface by detachably securing the clamping element in the pocket, thereby clamping the cutting insert between the clamping jaw and the support surface.

In one embodiment, the clamping element is detachably secured in the pocket by means of a clamping screw extending through a through hole of the clamping element and screwed into a screw hole provided in the pocket, which screw hole is extending perpendicular to the pocket base surface, wherein by tightening the clamping screw, the cutting insert is clamped between the clamping jaw and the support surface.

### BRIEF DESCRIPTION OF THE DRAWINGS

In the following, an embodiment of the invention will be described in detail with reference to the drawings. Throughout the drawings, the same elements will be denoted by the same reference numerals.
- Fig. 1:: shows a cutting tool in a perspective view.
- Fig. 2:: shows a front view of the cutting tool of Fig. 1.
- Fig. 3:: shows a detail III of Fig. 2.
- Fig. 4:: shows the cutting tool of Fig. 1 in an exploded perspective view.
- Fig. 5:: shows a front of the cutting tool of Fig. 1 in side view.
- Fig. 6:: shows a main body of a tool holder of the cutting tool of Fig. 1 in a perspective view.
- Fig. 7:: shows a clamping element of a tool holder of the cutting tool of Fig. 1 in a perspective view.
- Fig. 8:: shows the clamping element of Fig. 7 in a side view.
- Fig. 9:: shows a cutting insert of the cutting tool of Fig. 1 in a first perspective view.
- Fig. 10:: shows the cutting insert of Fig. 9 in a second perspective view.

### DETAILED DESCRIPTION OF EMBODIMENTS OF THE INVENTION

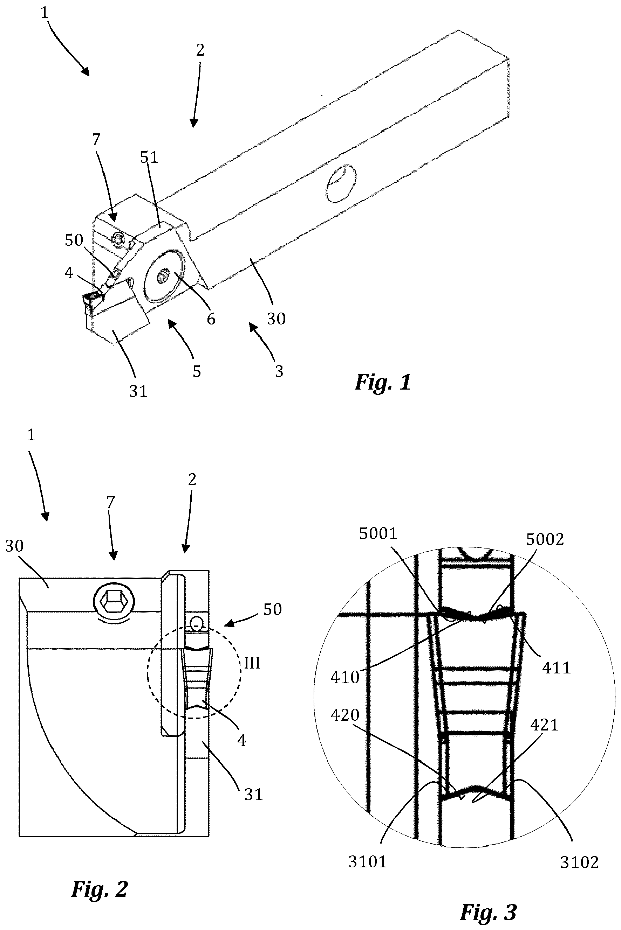

Figs. 1, 2, 4 and 5 show a cutting tool 1 comprising a tool holder 2 and a cutting insert 4.

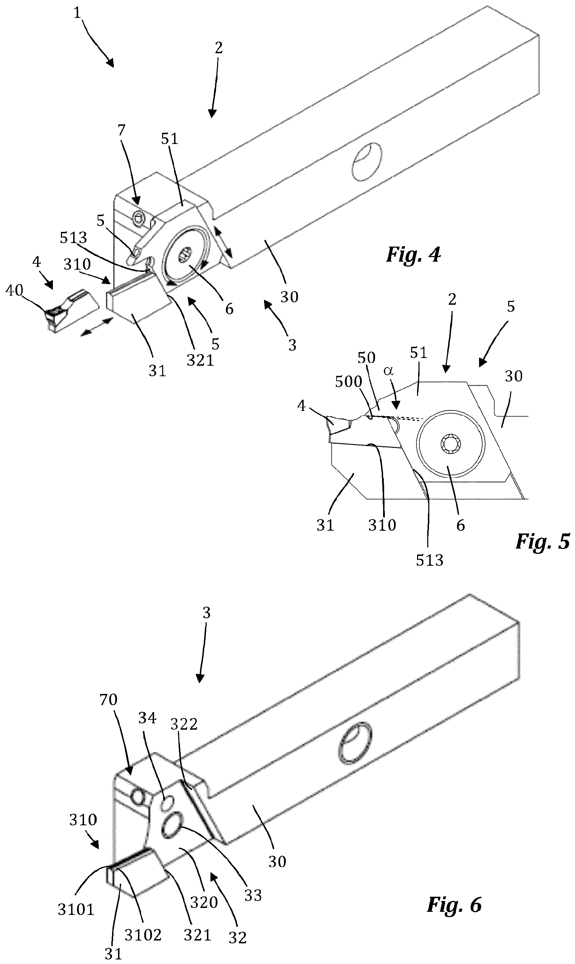

The tool holder 2 comprises a main body 3 having a shank 30 and a support portion 31 projecting from the shank 30 in a forward direction. The main body 3 of the tool holder 2 is shown in isolation in Fig. 6.

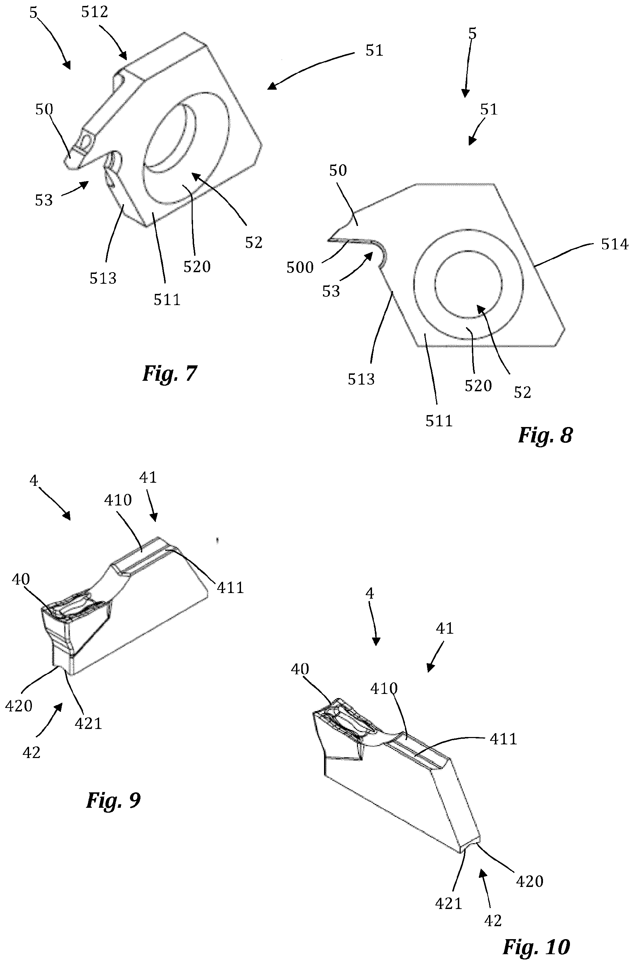

The tool holder 2 further comprises a clamping element 5 formed separately from the main body 3, which is shown in isolation in Figs. 7 and 8. The clamping element 5 has a clamping jaw 50 and an element base body 51. The clamping element 5 is secured to the main body 3 using a clamping screw 6, wherein the clamping element 5 and the main body 3, more particular the clamping jaw 50 and the support portion 31 together form a clamping system for the cutting insert 4.

As best seen in Figs. 4 and 6, the support portion 31 of the main body 3 at a top face has a support surface 310. As shown in Fig. 6 and the detail of Fig. 3, the support surface 310 comprises two oppositely inclined sub-surfaces 3101, 3102. An angle enclosed by the two sub-surfaces 3101, 3102 points upwards, such that the support surface 310 is convexly shaped.

Rearwards of the support portion 31, the main body 3 is provided with a pocket 32 having a pocket base surface 320 facing towards a side of the main body 3 with a screw hole 33 extending perpendicular to the pocket base surface 320. The pocket 32 is provided with a forward abutment surface 321 and a rearward abutment surface 322 in the axial direction of the main body 3; which extend in parallel to each other. The forward abutment surface 321 of the pocket 32 reaches to the support surface 31.

In the embodiment shown, the forward abutment surface 321 and the rearward abutment surface 322 of the pocket 32 are inclined forwards.

The clamping element 5 shown in isolation in Figs. 7 and 8. The clamping element 5 is provided with a clamping jaw 50 and an element base body 51 with a through hole 52, wherein the clamping jaw 50 projects from the element base body 51. The through hole 52 has a conical contact surface 520. In the embodiment shown, the element base body 51 is plate-shaped with two parallel main surfaces 511, 512. The through hole 52 is provided between the main surfaces 511, 512 and extends perpendicular to the main surfaces 511, 512. The element base body 51 has a forward abutment surface 513 and a rearward abutment surface 514 arranged perpendicular to the main surfaces 511, 512.

The clamping jaw 50 projects from the forward abutment surface 513 of the element base body 51. A cut-out 53 is provided at the transition region between the forward abutment surface 513 and the clamping jaw 50. In the embodiment shown, a thickness of the clamping jaw 50 is less than a thickness of the element base body 51 for increasing an elastic deformability of the clamping jaw 50 with respect to the element base body 51.

The clamping element 5 is received in the pocket 32 of the main body 3, wherein one main surface 512 abuts the pocket base surface 320 and the clamping jaw 50 protrudes forward from the pocket 32 and is positioned above the support portion 31.

In the embodiment shown, in addition a coolant hole with a plug screw 7 is provided. In the embodiment shown, the plug screw 7 is inserted into a bore 70 provided at the main body 3 (see Fig. 5). At the pocket base body 320 a coolant port 34 is provided.

The clamping jaw 50 has a clamping surface 500, which when the clamping element 5 is attached to the main body 3 faces the support surface 310. In the embodiment shown, the clamping surface 500 comprises two oppositely inclined sub-surfaces 5001, 5002. An angle enclosed by the two sub-surfaces 5001, 5002 points downwards towards the support surface 310, such that the clamping surface 500 is convexly shaped.

As shown in Fig. 5, in a side view the clamping surface 500 of the clamping jaw 50 facing the support surface 310 is inclined downwards with respect to the support surface 310 as indicated by broken lines in Fig. 5 by an angle α of less than about 4°, preferably of less than about 2°. Due to this inclination, the clamping jaw 50 initially contacts the insert 4 with its tip. Upon an elastic deformation of the clamping jaw 50 away from the support surface 310 a contact area between the clamping jaw 50 and the insert 4 increases.

The cutting insert 4 is shown in isolation in Figs. 9 and 10. The cutting insert 4 of the embodiment shown is a grooving insert and has a cutting edge 40 at its front face. Of course, other cutting inserts can be provided. As shown in Fig. 4, the cutting insert 4 is inserted and clamped between the support surface 310 and the clamping jaw 50. At a top and a bottom of the cutting insert 4 contact surfaces 41, 42 are provided. The contact surfaces 41, 42 are concavely shaped for matching the convex shape of the support surface 310 and the clamping surface 500 and each are provided with two oppositely inclined sub-surfaces 410, 411, 420, 421 (see also Fig. 3).

As shown in Fig. 4, the forward abutment surface 321 of the pocket 32 reaches to the support surface 31 and is shorter than the forward abutment surface 513 of the clamping element 5, such that the forward abutment surface 513 of the clamping element 5 projects from the forward abutment surface 321 of the pocket 32 for providing an axial stopper for the cutting insert 4 received.

In the following, a clamping of a cutting insert 4 is described. As indicated in Fig. 4, the clamping element 5 is slidingly arranged on the main body 3. More particular, the element base body 51 is slidingly received between the forward abutment surface 321 and the rearward abutment 322 of the pocket 32, wherein the forward abutment surface 513 of the element base body 51 abuts the forward abutment surface 321 of the pocket 31 and the rearward abutment 514 of the element base body 51 abuts the rearward abutment 322 of the pocket 32. The clamping element 5 in one embodiment is within limits slidingly mounted to the main body 3 by means of the clamping screw 6, which extends through the through hole 52 of the clamping insert 5 is loosely screwed in the screw hole 33.

The cutting insert 4 is inserted into a receiving opening formed between the clamping jaw 51 and the support surface 310.

As described above, the through hole 52 of the clamping element 5 has a conical surface 520. A screw head of the clamping screw 6 (not visible in the drawings) has a complementary conical surface. When tightening the clamping screw 6, the clamping element 5 is slidingly moved in the pocket 32 and positioned within the pocket 32, thereby forcing the clamping jaw 50 of the clamping jaw 50 towards the support surface 310. A final mounting position of the clamping element 5 in the pocket 32 is chosen such that in the final mounting position a distance of the clamping jaw 51 from the support surface 310 in a final mounting position is less than a height of the cutting insert 4. Therefore, when tightening the clamping screw 6 and forcing the clamping element 5 towards the final mounting position, the clamping jaw 51 is resiliently deformed and exerts a resilient clamping force on the cutting insert 4.

## Claims

1. A tool holder with a main body (3) having a shank (30) and a support portion (31) projecting from the shank (30) in a forward direction, wherein the support portion (31) at a top face has a support surface (310), the tool holder (2) further comprising a clamping jaw (50) with a clamping surface (500), which together with the support surface (310) forms a clamp for a cutting insert (4),
**characterized in that**
the clamping jaw (50) is provided on a clamping element (5) formed separately from the main body (3),
wherein the clamping element (5) has an element base body (51) and the clamping jaw (50) projects from the element base body (51),
wherein rearwards of the support portion (31) the main body (3) is provided with a pocket (32) for receiving the element base body of the clamping element (5), the pocket (32) having a pocket base surface (320) facing towards a side of the main body (3),
wherein the clamping element (5) is detachably secureable in the pocket (32), and wherein when the clamping element (5) is secured in the pocket (32), the clamping jaw (50) is forced towards the support surface (31).

2. The tool holder according to claim 1, **characterized in that**
the element base body (51) has a through hole (52) and the pocket (32) has a screw hole (33) extending perpendicular to the pocket base surface (320),
wherein the clamping element (5) is detachably secureable in the pocket (32) by means of a clamping screw (6) extending through the through hole (52) and screwed into the screw hole (320).

3. The tool holder according to claim 2, **characterized in that** the through hole (52) of the clamping element (5) and a screw head of the clamping screw (6) are provided with complementary conical contact surfaces (520).

4. The tool holder according to claim 1, 2 or 3, **characterized in that** the pocket (32) and the element base body (51) each are provided with a forward abutment surface (321, 513) and a rearward abutment surface (322, 514) in an axial direction of the main body (3); which extend in parallel to each other, wherein the element base body (51) is slidingly received between the forward abutment surface (321) and the rearward abutment (322) of the pocket (32).

5. The tool holder according to claim 4, **characterized in that** the forward abutment surfaces (321, 513) and the rearward abutment surfaces (322, 514) of the pocket (32) and the element base body (51) each are inclined forwards.

6. The tool holder according to claim 4 or 5, **characterized in that** the clamping jaw (50) projects from the forward abutment surface (513) of the element base body (51).

7. The tool holder according to any one of claims 4 to 6, **characterized in that** the forward abutment surface (321) of the pocket (32) reaches to the support surface (31) and is shorter than the forward abutment surface (513) of the clamping element (5), such that the forward abutment surface (513) of the clamping element (5) projects from the forward abutment surface (321) of the pocket (32) for providing an axial stopper for a cutting insert (4) received.

8. The tool holder according to any one of claims 1 to 7, **characterized in that** a thickness of the clamping jaw (50) is less than a thickness of the element base body (51).

9. The tool holder according to any one of claims 1 to 8, **characterized in that** in a side view, the clamping surface (500) of the clamping jaw (50) is inclined with respect to the support surface (31) towards the support surface (310), preferably by an angle of less than about 4°.

10. The tool holder according to any one of claims 1 to 9, **characterized in that** the clamping surface (500) of the clamping jaw (50) facing the support surface (310) comprises two oppositely inclined sub-surfaces (5001, 5002), wherein in particular the clamping surface (500) is convexly shaped.

11. The tool holder (2) according to any one of claims 1 to 10, **characterized in that** the support surface (310) comprises two oppositely inclined sub-surfaces (3101, 3102), wherein in particular the support surface is convexly shaped.

12. Cutting tool comprising a tool holder (2) according to any one of claims 1 to 11 and a cutting insert (4), wherein the cutting insert (4) is detachably clamped between the clamping jaw (50) and the support surface (310) of the tool holder (2).

13. A method for clamping a cutting insert in a tool holder (2) comprising a main body (3) having a shank (30) and a support portion (31) projecting from the shank (30) in a forward direction, wherein the support portion (31) at a top face has a support surface (31),
wherein a clamping element (5) having an element base body (51) and a clamping jaw (50) protruding from the element base body (51) is inserted in a pocket (32) of the main body (3), which pocket (32) is provided rearwards of the support portion (31) of the main body (3) and has a pocket base surface (320) facing towards a side of the main body (3), and
wherein the clamping jaw (50) is forced towards the support surface (310) by detachably securing the clamping element (5) in the pocket (32), thereby clamping the cutting insert (4) between the clamping jaw (50) and the support surface (310).

14. The method according to claim 13, **characterized in that** the clamping element (5) is detachably secured in the pocket (32) by means of a clamping screw (6) extending through a through hole (52) of the clamping element (5) and screwed into a screw hole (33) provided in the pocket (32), which screw hole (33) is extending perpendicular to the pocket base surface (320), wherein by tightening the clamping screw (6), the cutting insert (4) is clamped between the clamping jaw (50) and the support surface (310).
